# EUROPEAN PATENT APPLICATION

(11) **EP 3 975 090 A2**
(43) Date of publication of application: **30.03.2022**
(21) Application number: 20808772.6
(22) Date of filing: 21.05.2020
(51) Int. Cl.: G06Q 20/32

(54) **SELLER CALCULATOR AND PAYMENT SYSTEM INCLUDING SAME**

(30) Priority: 23.05.2019 KR 20190060678
(71) Applicant: Harexinfotech Inc., Seoul 06632 (KR)
(72) Inventor: PARK, Kyung Yang, Seoul 03035 (KR)
(74) Representative: Sander, Rolf
(86) International application number: PCT/KR2020/006664
(87) International publication number: WO 2020/235950

(57) **Abstract**

The present invention relates to a merchant calculator and a payment system including same. The merchant calculator according to the present invention comprises: an input unit for receiving numeric data and operation commands for calculating payment amount information; a processor for calculating the payment amount information; and a communicator for transmitting the payment amount information and seller-side identification information. The payment system according to the present invention comprises: the merchant calculator for transmitting the payment amount information and the seller-side identification information; and a purchaser device for receiving the payment amount information and the seller-side identification information to perform mobile payment.

## Description

### [Technical Field]

The present invention relates to a merchant calculator and a payment system including the same.

### [Background Art]

Development of mobile payment technology enables a seller to perform mobile payment by presenting a quick response (QR) code or a near field communication (NFC) tag, etc., to transmit payment-related information (a store identification (ID)) to a purchaser and using a purchaser terminal without having a payment terminal such as a cardholder-activated terminal (CAT) or a point of sale (POS) terminal.

However, when the purchaser needs to directly input the payment amount, the payment amount may be entered incorrectly, and thus the seller not only has an inconvenience of informing the purchaser of the payment amount, but also needs to check whether the purchaser has correctly entered and paid (transferred) the payment amount, which lowers a convenience of payment for both the purchaser and the seller.

### [Disclosure]

### [Technical Problem to be Solved]

To solve the above-described problems, the present invention provides a payment system capable of easing the inconvenience of consumers and preventing transaction errors by proposing a merchant calculator including a wireless communication module that wirelessly transmits store identification information and payment amount information for user-centered mobile payment.

### [Technical Solution]

One aspect of the present invention provides a merchant calculator comprising
an input unit configured to receive numeric data and an operation command for calculating payment amount information, a processor configured to calculate the payment amount information, and a communication unit configured to transmit the payment amount information and identification information of a seller side.

Another aspect of the present invention provides a payment system including a merchant calculator configured to transmit payment amount information and identification information of a seller side, and a purchaser device configured to receive the payment amount information and the identification information of the seller side and perform a mobile payment.

### [Effects of the Invention]

According to the present invention, a seller transmits payment amount information calculated or input through a calculator and seller-side identification information using a wireless communication module so that the seller can support mobile payment using a mobile terminal of a purchaser without having a payment terminal such as a cardholder-activated terminal (CAT) terminal or a point of sale (POS) terminal.

The present invention can ease the inconvenience of a consumer needing to perform an active action, such as a quick response (QR) code recognition or near field communication (NFC) tag recognition, to recognize seller-side identification information (an ID of a store), and prevent an error in entering a transaction amount from occurring at a purchaser side so that payment convenience can be improved for both the seller and the purchaser.

The effects of the present invention are not limited to those described above, and other effects not described above will be clearly understood by those skilled in the art from the above detailed description.

### [Description of Drawings]

FIG. 1 is a block diagram illustrating a payment system according to an embodiment of the present invention.
FIG. 2 is a block diagram illustrating a merchant calculator according to an embodiment of the present invention.
FIG. 3 is a diagram illustrating a merchant calculator according to an embodiment of the present invention.

### [Modes of the Invention]

Hereinafter, the above and other objectives, advantages, and features of the present invention and ways of achieving them will become readily apparent with reference to descriptions of the following detailed embodiments in conjunction with the accompanying drawings

However, the present invention is not limited to embodiments to be described below and may be embodied in various forms. The embodiments to be described below are provided only to assist those skilled in the art in fully understanding the objectives, configurations, and the effects of the invention, and the scope of the present invention is defined only by the appended claims.

Meanwhile, terms used herein are used to aid in the explanation and understanding of the embodiments and are not intended to limit the scope and spirit of the present invention. It should be understood that the singular forms "a" and "an" also include the plural forms unless the context clearly dictates otherwise. The terms "comprises," "comprising," "includes," and/or "including," when used herein, specify the presence of stated features, integers, steps, operations, elements, components and/or groups thereof and do not preclude the presence or addition of one or more other features, integers, steps, operations, elements, components, and/or groups thereof.

Before describing the embodiments of the present invention, the background for proposing the present invention will be described first for the sake of understanding for those skilled in the art.

According to the conventional technology, a store is provided with a payment terminal, such as a high-functioning card reader, e.g., a cardholder-activated terminal (CAT), or a sales terminal, e.g., a point of sale (POS) terminal, to process a payment process.

Recently, in order for an electronic transaction to be performed even in a store without such a payment terminal, a store identifier (ID) identification device, such as a quick response (QR) code or a near field communication (NFC) tag, is used.

However, in this case, a process is required in which a consumer who is to perform a payment scans a QR code by manipulating his/her mobile terminal, and an inconvenience of directly entering a purchase amount after recognition of a store ID or the like is caused.

In addition, an error in inputting the purchase amount in the process of directly entering the purchase amount causes an inconvenience both to the seller and the purchaser.

For example, in a Kakao Pay QR payment, the payment process is performed such that a purchaser scans a QR code presented by a seller side using his/her terminal and enters the amount to send and transfers the amount.

However, the payment process requires a process 1) of the seller informing the purchaser of the payment amount, a process 2) of the purchaser directly entering the payment amount information, a process 3) of the seller checking whether the purchaser has correctly entered the payment amount information and completed transfer, thereby the convenience of payment is lowered for both the seller and the purchaser.

For example, the process 1) requires the seller to inform the purchaser of the amount to be paid verbally or in other ways. However, informing the purchaser of the payment amount verbally in a congested and noisy store has a low accuracy of information delivery, and when the purchaser mishears the payment amount and enters the payment amount incorrectly, cancellation of payment, re-payment, or additional transfer is required.

In addition, when the purchaser mishears the payment amount, the purchaser needs to perform a process of asking the seller a question repeatedly, whereby the mutual convenience is greatly reduced and the purchaser has serious dissatisfaction with the payment service and further with the service itself provided by the seller.

In addition, even when the seller informs the purchaser of the payment amount using a display device, separate paper, or the like, the seller has an inconvenience of providing a display device, paper, or the like for transmitting the payment amount information, and although the payment amount is more smoothly recognized than a case in which the payment amount is transmitted verbally, the purchaser still has an inconvenience in the subsequent payment process, such as entering the payment amount information into his/her mobile terminal and reentering when an error occurs in entering the payment amount information.

The present invention is directed to providing a payment system having a merchant calculator that is equipped with a wireless communication module configured to wirelessly transmit seller-side identification information (a store ID, etc.) and payment amount information for a user-centered mobile payment so that an inconvenience that may occur in a payment process is minimized by obviating a need for the purchaser to directly enter payment amount information, and a smooth payment process is achieved by preventing a transaction error.

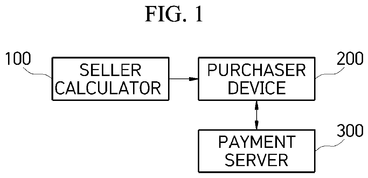

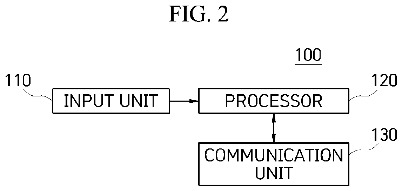

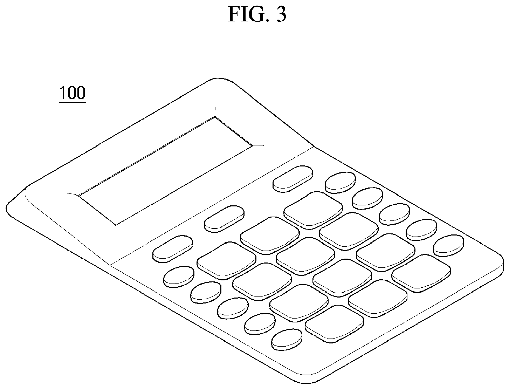

FIG. 1 is a block diagram illustrating a payment system according to an embodiment of the present invention, FIG. 2 is a block diagram illustrating a merchant calculator 100 according to an embodiment of the present invention, and FIG. 3 is a diagram illustrating a merchant calculator 100 according to an embodiment of the present invention.

The payment system according to the embodiment of the present invention includes a merchant calculator 100 that transmits seller-side identification information and payment amount information, a purchaser device 200 that performs a payment using the seller-side identification information and the payment amount information, and a payment server 300 that communicates with the purchaser device 200 to transmit an approval for a payment request.

The merchant calculator 100 includes an input unit 110 that receives data through an input of a button, a processor 120 that performs an operation on the data, and a communication unit 130 that transmits data or an operation result.

The merchant calculator 100 includes buttons included in a general electronic calculator, such as buttons for 1 to 9, 0, 000, arithmetical operation (+, -, x, ÷) symbols, power On/Off, all clear (AC), clear entry (CE), =, etc., as shown in the drawings.

Additionally, the merchant calculator 100 may be provided with buttons corresponding to menu and price information in the corresponding store. For example, a "caffelatte (large size) 5,000 won" button is provided in a street cafe, and when an input of the button is made one time, 5,000 won is reflected in input for calculation of the total price. The merchant calculator 100 is initially provided with a plurality of null buttons, and through a user's input or correction, allows price information reflected in the calculation at a time of button input to be stored in the first to N^{th} null buttons. The merchant calculator 100 may not only simply display the input number on the display unit, but also display price information and quantity corresponding to the input number. For example, when the abbreviation of caffelatte is determined as CL, and an order for two cups of caffelatte is input, the merchant calculator 100 may display "10,000 (CLx2)" as price information so that the store host may intuitively check whether he/she has correctly entered the price information according to the order. The price information transmitted from the merchant calculator 100 to the purchaser device 200 may include only the total price information (amount), or additionally include order information (information about two cups of caffelatte, possibly together with an abbreviation of caffelatte). The merchant calculator 100 is provided with a speaker to inform the input price information and/or menu information by an utterance. For example, when a "caffelatte (large size) 5,000 won" button on the merchant calculator 100 is pressed three times, an utterance is provided as "three cups of cafe latte, large size" so that whether the input according to the order is placed correctly may be checked. Alternatively, the merchant calculator 100, when the entire input is completed, may provide a completion message saying, "The order for three cups of cafe latte, large size, 15,000 won has been completed. Please proceed with the payment on customer smartphone." In addition, the merchant calculator 100, when only numeric input is made, may transmit the total payment amount information to the purchaser device 200, and when the order is completed through the above-described menu button input, transmit purchase information to the purchaser device 200 such that the above-described completion message is provided in a text.

In addition, the merchant calculator 100 according to the embodiment of the present invention includes "payment request" and "cancellation" buttons.

A short-distance wireless transmission module included in the merchant calculator 100 according to the embodiment of the present invention employs a Bluetooth low energy (BLE) module, sound waves or NFC, etc.

The purchaser device 200 according to the embodiment of the present invention receives identification information and payment amount information transmitted from the merchant calculator 100 through a wireless transmission/reception short-distance communication function in such a method as Bluetooth, sound wave, or NFC.

The seller calculates the amount information to be requested for payment from the purchaser through arithmetic operations, etc. using the merchant calculator 100 and transmits the calculated amount information to the purchaser device 200 using the merchant calculator 100 having the communication unit 130.

In this case, identification information (a store ID) is input into the merchant calculator 100 in advance, and the merchant calculator 100 simultaneously transmits the payment amount information calculated by the processor 120 and the identification information to the purchaser device 200 using the communication unit 130.

Therefore, according to the embodiment of the present invention, the purchaser may perform a mobile payment using the identification information and payment amount information received through the purchaser device 200 and have no need to directly input the payment amount information, thereby having an effect of resolving an inconvenience in a payment process caused by an incorrect delivery of payment amount from the seller to the purchaser, or by an incorrect input of payment amount information by the purchaser.

In the communication unit 130 of the merchant calculator 100, the datalink distance is set to a preset distance to ensure a one-to-one payment environment between the seller side and the purchaser side, for example, the datalink distance is adjusted to be limited within 50 centimeters or 1 meter.

According to the embodiment of the present invention, based on a program for transmitting identification information and payment amount information being installed, the existing calculator may be allowed to be used without change, and in this case, a separate mold does not need to be manufactured.

In addition, when manufacturing a new mold for the merchant calculator 100 according to the embodiment of the present invention, a payment request button and a cancellation button are provided as described above.

According to the above-described embodiment, when the existing calculator is used without change, the processor 120, in order to transmit identification information and payment amount information, transmits a transmission command to the communication unit 130 according to an input of a designated specific key for transmission.

For example, when the sales amount is 5,000 won, the seller inputs 5,000 won through a button input of the merchant calculator 100 and transmits identification information and payment amount information through an input of a specific key for transmission (e.g., an input of a button for "=" two times).

The processor 120 of the merchant calculator 100 transmits the identification information and the payment amount information a preset number of times within a preset time.

In addition, when the purchaser fails to receive the identification information and the payment amount information, the identification information and the payment amount information are transmitted again through re-input of the designated specific key for transmission of the merchant calculator 100 (a re-input of the button for "=" two times as described above).

According to the embodiment of the present invention, the merchant calculator 100 transmits the identification information and the payment amount information during a preset time (a time required to complete payment through the purchaser device 200, which is variably settable to about five to fifteen seconds) according to an input of a payment request (which may also be termed as a settlement request) button.

In this case, the identification information may include a store host ID and an ID of the merchant calculator 100.

Subsequently, when the payment is completed through the purchaser device 200 within the preset time, the payment server 300 transmits payment completion information to a mobile terminal of the seller side (e.g., a store host or a salesperson), and the transmission of the above-described identification information and payment amount information is stopped according to an input of the cancellation button of the merchant calculator 100.

In addition, when payment completion information is not received within the preset time, the seller may input a designated specific key for transmission of the merchant calculator 100 (e.g., an input of the button for "=" or an input of the payment request button two times) so that the transmission of the identification information and payment amount information is performed again.

The communication unit 130 of the merchant calculator 100 is linked with the payment server 300 or a device of the seller, and when the payment is completed, payment completion confirmation information is transmitted to the processor 120, and the processor 120 may present that the payment has been completed through the merchant calculator 100 or may be reset.

Although the present invention has been described with reference to the embodiments, a person of ordinary skill in the art should appreciate that various modifications, equivalents, and other embodiments are possible without departing from the scope and sprit of the present invention. Therefore, the embodiments disclosed above should be construed as being illustrative rather than limiting the present invention. The scope of the present invention is not defined by the above embodiments but by the appended claims of the present invention, and the present invention is to cover all modifications, equivalents, and alternatives falling within the spirit and scope of the present invention.

## Claims

1. A merchant calculator comprising:
an input unit configured to receive numeric data and an operation command for calculating payment amount information;
a processor configured to calculate the payment amount information; and
a communication unit configured to transmit the payment amount information and identification information of a seller side.

2. The merchant calculator of claim 1, wherein the input unit receives the numeric data and the operation command corresponding to an elementary arithmetic operation through an input of a button attached to the merchant calculator.

3. The merchant calculator of claim 1, wherein the communication unit is configured to transmit the payment amount information and the identification information of the seller side through wireless communication including Bluetooth, near field communication (NFC), or sound waves.

4. The merchant calculator of claim 1, wherein the processor executes a payment amount information and identification information transmission program and, in response to an input of a predetermined button being provided through the input unit, performs transmission of the payment amount information and the identification information.

5. The merchant calculator of claim 1, further comprising a timer,
wherein the timer records a transmission time of the identification information and the payment amount information through the communication unit, and the processor stops the transmitting in response to the transmission time being longer than or equal to a preset time

6. The merchant calculator of claim 1, wherein the communication unit sets a datalink distance as a preset distance to maintain a one-to-one payment environment of the seller side and a purchaser side.

7. The merchant calculator of claim 1, wherein the identification information includes an identification (ID) of a store host or an ID of the merchant calculator.

8. A payment system comprising:
a merchant calculator configured to transmit payment amount information and identification information of a seller side; and
a purchaser device configured to receive the payment amount information and the identification information of the seller side and perform a mobile payment.

9. The payment system of claim 8, wherein the merchant calculator simultaneously transmits the payment amount information and the identification information of the seller side through a wireless communication module including Bluetooth, near field communication (NFC), or sound waves.

10. The payment system of claim 8, wherein the purchaser device transmits a payment approval request to a payment server using the received payment amount information and the identification information of the seller side.

11. The payment system of claim 8, wherein the merchant calculator is set to have a datalink distance within a preset distance to maintain a one-to-one payment environment of the seller side and a purchaser side.
